# EUROPEAN PATENT APPLICATION

(11) **EP 1 758 188 A1**
(43) Date of publication of application: **28.02.2007**
(21) Application number: 05739277.1
(22) Date of filing: 12.05.2005
(51) Int. Cl.: H01M 8/04, H01M 8/10

(54) **FUEL CELL**

(30) Priority: 14.05.2004 JP 2004145187
(71) Applicant: KABUSHIKI KAISHA TOSHIBA, Tokyo 105-8001 (JP)
(72) Inventor: KAN, Hirofumi, Minato-ku, Tokyo 105-8001 (JP); NEGISHI, Nobuyasu, Minato-ku, Tokyo 105-8001 (JP); SATOH, Asako, Minato-ku, Tokyo 105-8001 (JP); TAKIZAWA, Yumiko, Minato-ku, Tokyo 105-8001 (JP); HASEBE, Hiroyuki, Minato-ku, Tokyo 105-8001 (JP); SATO, Yuuichi, Minato-ku, Tokyo 105-8001 (JP); MOMMA, Jun, Minato-ku, Tokyo 105-8001 (JP)
(74) Representative: Henkel, Feiler & Hänzel
(86) International application number: PCT/JP2005/008713
(87) International publication number: WO 2005/112172

(57) **Abstract**

A fuel cell includes a cathode catalyst layer (2), an anode catalyst layer (3), a proton-conductive membrane (6) provided between the cathode catalyst layer (2) and the anode catalyst layer (3), and a fuel transmitting layer (10) that supplies a vaporized component of a liquid fuel to the anode catalyst layer (3), and wherein water generated in the cathode catalyst layer (2) is supplied to the anode catalyst layer (3) via the proton-conductive membrane (6), and the liquid fuel is one of a methanol aqueous solution having a concentration of over 50% by molar and liquid methanol.

## Description

### Technical Field

The present invention relates to a fuel cell of a system in which a vaporized fuel obtained by vaporizing a liquid fuel is supplied to anode catalyst layer.

### Background Art

In recent years, various types of electronic devices such as personal computers and mobile telephones have been reduced in size as the semiconductor technology advances, and there have been attempts in which a fuel cell is used as the power source of a small-sized device. A fuel cell has such advantages that it can generate electrical power merely by supplying the fuel and oxidizer thereto, and it can continuously generate power merely by replacing the fuel. Therefore, when the downsizing can be achieved, it would create an extremely advantageous system for the operation of mobile electronic devices. Especially, the direct methanol fuel cell (DMFC) uses methanol having a high energy density as its fuel and can generate an electrical current on the electrode catalyst from methanol. Thus, this cell does not require a reformer, and therefore it can be reduced in size. Since the handling of the fuel is easy as compared to that of a hydrogen gas fuel, it is a hopeful power source for small-sized devices.

Conventionally, there are several types of DMFCs categorized by their fuel supplying methods; one is the gas-supply type DMFC, in which the liquid fuel is vaporized and then the vaporized fuel is supplied with a blower or the like into the fuel cell, and another is the liquid-supply type DMFC, in which the liquid fuel is directly supplied with a pump or the like into the fuel cell. However, these fuel supply methods require auxiliary equipments such as a pump for supplying methanol and a blower for supplying air as described above. Thus, the system naturally takes a complicated form, and it becomes difficult to reduce the cell in size, which is a drawback of these techniques.

Further, there is another known type of DMFC, which can be categorized in terms of the fuel supplying method, that is, the internal vaporization-type DMFC, as disclosed in Patent Publication No. 3413111. The internal vaporization DMFC discloses a fuel penetration layer which retains the liquid fuel and a fuel transmitting layer that diffuses evaporated components of the liquid fuel retained in the fuel penetration layer, and has such a structure that the evaporated components of the liquid fuel is supplied from the fuel transmitting layer to the fuel electrode. In the above-described Patent Publication, a methanol aqueous solution in which methanol and water are mixed at a molar ratio of 1:1 is used as the liquid fuel, and methanol and water are supplied to the fuel electrode both in the form of evaporation gas.

With such an internal evaporation DMFC as disclosed in the Patent Publication, sufficiently high output performance cannot be obtained. This is because water has a low vapor pressure as compared to that of methanol, and the vaporization speed of water is slower than that of methanol. Therefore, if methanol and water are supplied to the fuel electrode both by evaporation, the relative supply amount of water becomes short with respect to that of methanol. As a result, the reaction resistance of the reaction of reforming methanol inside the cell becomes high, thereby making it not possible to obtain sufficiently high output performance.

### Disclosure of Invention

An object of the present invention is to improve the output performance of a fuel cell of the type in which a vaporized component of the liquid fuel is supplied to the anode catalyst layer.

According to the first aspect of the present invention, there is provided a fuel cell comprising: a cathode catalyst layer; an anode catalyst layer; a proton-conductive membrane provided between the cathode catalyst layer and the anode catalyst layer; and a fuel transmitting layer that supplies a vaporized component of a liquid fuel to the anode catalyst layer, the fuel cell characterized in that:
water generated in the cathode catalyst layer is supplied to the anode catalyst layer via the proton-conductive membrane, and
the liquid fuel is one of a methanol aqueous solution having a concentration of over 50% by molar and liquid methanol.

According to the second aspect of the present invention, there is provided a fuel cell characterized by comprising:
a cathode catalyst layer;
an anode catalyst layer;
a proton-conductive membrane provided between the cathode catalyst layer and the anode catalyst layer;
a fuel transmitting layer that supplies a vaporized component of a liquid fuel to the anode catalyst layer;
a surface layer having an air introduction opening; and
a moisture retaining plate, provided between the surface layer and the cathode catalyst layer, that suppresses evaporation of water generated in the cathode catalyst layer.

According to the third aspect of the present invention, there is provided a fuel cell comprising:
a cathode;
an anode;
a proton-conductive membrane provided between the cathode and the anode;
a fuel transmitting layer that transmits a vaporized component of a methanol-containing liquid fuel; and
an anode moisture retaining plate, provided between the anode and the fuel transmitting layer, that includes at least one methanol transmitting film having a methanol transmitting degree of 1 × 10⁵ cm³/m²·24 hr·atm to 1 × 10⁹ cm³/m²·24 hr·atm, measured by method A of JIS K7126-1987 at 25°C,
wherein water generated in the cathode is supplied to the anode via the proton-conductive membrane.

According to the fourth aspect of the present invention, there is provided a fuel cell comprising:
a cathode;
an anode;
a proton-conductive membrane provided between the cathode and the anode;
an air introduction portion that introduces air to the cathode;
a moisture retaining plate, provided between the air introduction portion and the cathode, that suppresses evaporation of water generated in the cathode;
a fuel transmitting layer that transmits a vaporized component of a methanol-containing liquid fuel; and
an anode moisture retaining plate, provided between the anode and the fuel transmitting layer, that includes at least one methanol transmitting film having a methanol transmitting degree of 1 × 10⁵ cm³/m²·24 hr·atm to 1 × 10⁹ cm³/m²·24 hr·atm, measured by method A of JIS K7126-1987 at 25°C.

### Brief Description of Drawings

FIG. 1 is a diagram schematically showing a cross section of a direct methanol fuel cell according to the first embodiment of the present invention;
FIG. 2 is a characteristic diagram indicating the relationship between the thickness of a proton conductive electrolytic membrane and the maximum output;
FIG. 3 is a characteristic diagram indicating the change in the output density along with time with regard to each of direct methanol fuel cells of Examples 1 to 7 and Comparative Example 1;
FIG. 4 is a characteristic diagram indicating the relationship between the current density and cell voltage with regard to each of direct methanol fuel cells of Examples 1 to 7 and Comparative Example 1;
FIG. 5 is a diagram schematically showing a cross section of a direct methanol fuel cell according to the second embodiment of the present invention; and
FIG. 6 is a diagram schematically showing a plan view of an example of the structure of an anode moisture retention layer of the direct methanol fuel cell shown in FIG. 5.

### Best Mode for Carrying Out the Invention

The inventors of the present invention carried out intensive studies and researches and found out that in a fuel cell which includes a fuel transmitting layer that supplies a vaporized portion of the liquid fuel to the anode catalyst layer, the reaction resistance of the internal reformation reaction of the fuel can be lowered by supplying water generated in the cathode catalyst layer to the anode catalyst layer via a proton-conductive membrane, thereby improving the output performance.

Especially, by utilizing the water generated in the cathode catalyst layer, the water retention amount of the cathode catalyst layer is made larger than the water retention amount of the anode catalyst layer. The diffusion of the generated water to the anode catalyst layer can be promoted via the proton-conductive membrane. Therefore, the water supplying speed can be improved as compared to the case where depending only on the vaporization, and therefore the reaction resistance of the internal reformation reaction of the fuel can be lowered, thereby improving the output performance.

Further, the water generated in the cathode catalyst layer can be used in the internal reformation reaction of the liquid fuel in the anode catalyst layer. Therefore, the load of the handling of the water, that is, the discharge of the water generated in the cathode catalyst layer to the outside of the fuel cell, can be lightened. Further, there is no special structure required to supply water to the liquid fuel. Thus, a fuel cell with a simple structure can be provided.

Furthermore, according to the present invention, it is possible to use a fuel having a high concentration that exceeds the stoichiometrical ratio, which cannot be theoretically used with conventional techniques.

A direct methanol fuel cell, which is an embodiment of the fuel cell according to the present invention will now be described with reference to accompanying drawings.

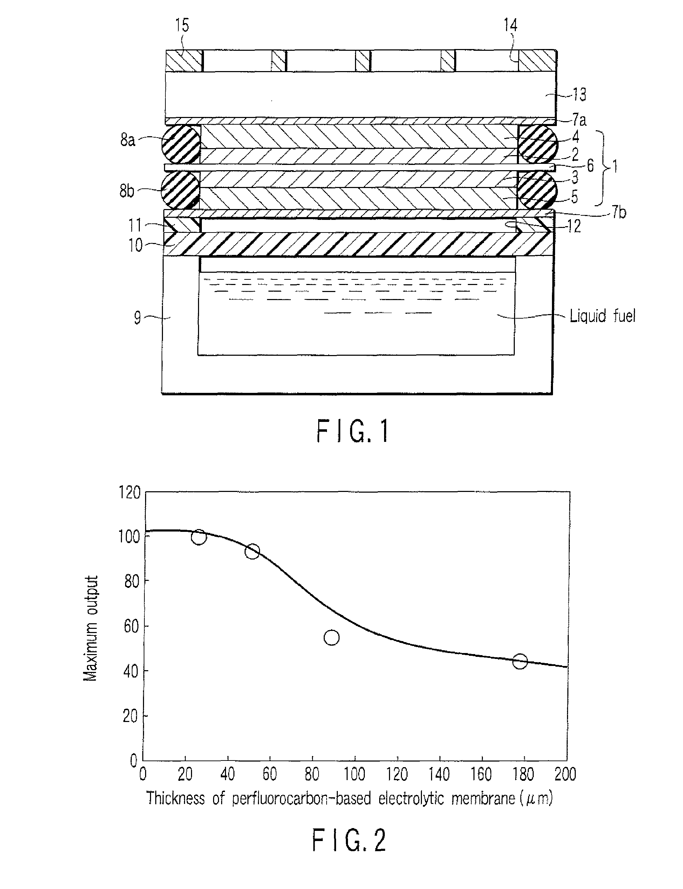

To begin with, the first embodiment will be described. FIG. 1 is a diagram schematically showing a cross section of a direct methanol fuel cell according to the first embodiment of the present invention.

As shown in FIG. 1, a membrane electrode assembly (MEA) 1 comprises a cathode electrode that includes a cathode catalyst layer 2 and cathode gas diffusion layer 4, an anode electrode that includes an anode catalyst layer 3 and anode gas diffusion layer 5, and a proton-conductive electrolytic membrane 6 provided between the cathode catalyst layer 2 and the anode catalyst layer 3.

Examples of the catalyst contained in the cathode catalyst layer 2 and anode catalyst layer 3 are single metals of the platinum metal group (such as Pt, Ru, Rh, Ir, Os and Pd) and alloys that contain platinum metal group elements. It is desired that Pt-Ru, which has a strong resistance to methanol or carbon monoxide should be employed as the anode catalyst, and platinum should be employed as the cathode catalyst; however the invention is not limited to these. It is alternatively possible to use a supported catalyst which uses a conductive carrier such as a carbon material, or a non-supported catalyst.

Examples of the proton-conductive material that forms the proton-conductive electrolytic membrane 6 are fluorocarbon resin containing a sulfonate group (such as a perfluorosulfonate polymer), hydrocarbon-based resin containing sulfonate group (such as polyetherketone containing sulfonate group or polyetheretherketone sulfonate), and inorganic materials such as tungstic acid and phosphotungstic acid. It should be noted that the proton-conductive material is not limited to the above-mentioned examples.

The cathode catalyst layer 2 is stacked on the cathode gas diffusion layer 4, and the anode catalyst layer 3 is stacked on the anode gas diffusion layer 5. The cathode gas diffusion layer 4 serves to supply the oxidizer uniformly on the cathode catalyst layer 2, and it also serves as a collector of the cathode catalyst layer 2. On the other hand, the anode gas diffusion layer 5 serves to supply the fuel uniformly on the anode catalyst layer 3, and it also serves as a collector of the anode catalyst layer 3. Cathode conductive layer 7a and anode conductive layer 7b are in contact with the cathode gas diffusion layer 4 and the anode gas diffusion layer 5, respectively. For each of the cathode conductive layer 7a and anode conductive layer 7b, a porous layer (such as mesh) made of a metal material such as gold can be employed.

A rectangular frame cathode sealing material 8a is provided between the cathode conductive layer 7a and the proton-conductive electrolytic membrane 6, to enclose the cathode catalyst layer 2 and cathode gas diffusion layer 4. On the other hand, a rectangular frame anode sealing material 8b is provided between the anode conductive layer 7b and the proton-conductive electrolytic membrane 6, to enclose the anode catalyst layer 3 and anode gas diffusion layer 5. The cathode sealing material 8a and the anode sealing material 8b are O-rings provided to prevent the leakage of the fuel and oxidizer from the membrane electrode assembly 1.

A liquid fuel tank 9 is provided underneath the membrane electrode assembly 1. The fuel tank 9 contains liquid methanol or aqueous solution of methanol. An opening end of the liquid fuel tank 9 is covered with, for example, a gas-liquid separation membrane 10 as a fuel transmitting layer 10, which allows only the vaporized component of the liquid fuel to penetrate therethrough and inhibits the penetration of the liquid portion. It should be noted here that in the case where liquid methanol is used as the liquid fuel, the vaporized component of the fuel is vaporized methanol, or in the case where a methanol aqueous solution is used as the liquid fuel, the vaporized component of the fuel is a mixture gas of a vaporized portion of methanol and vaporized components of water.

A resin-made frame 11 is sandwiched between the gas-liquid separation membrane 10 and the anode conductive layer 7b. The space enclosed by the frame 11 serves as a vaporized fuel containing chamber 12 (so-called vapor reservoir), which temporarily reserves the vaporized fuel that has been diffused through the gas-liquid separation membrane 10. Due to the above-described effect of controlling the amount of methanol by the vaporized fuel containing chamber 12 and the gas-liquid separation membrane 10, it is possible to inhibit an over-supply of vaporized fuel, that is, an excessive amount of vaporized gas being supplied to the anode catalyst layer 3 at one time. Therefore, the generation of the methanol crossover can be suppressed. It should be noted that the frame 11 is formed to have a rectangular shape and it is made of a thermoplastic polyester resin such as PET.

In the meantime, a moisture retaining plate 13 is stacked on the cathode conductive layer 7a formed to stack on the membrane electrode assembly 1. A surface layer 15 (air introduction member) is stacked on the moisture retaining plate 13, and a plurality of air introduction openings 14 designed to take in air, that is, an oxidizer, are formed in the surface layer 15. The surface layer 15 also serves to pressurize the stack structure including the membrane electrode assembly 1 in order to enhance the tightness of the structure, and therefore, it is made of a metal such as SUS304. The moisture retaining plate 13 serves to inhibit the evaporation of the water generated in the cathode catalyst layer 2, and also it serves to introduce the oxidizer uniformly into the cathode gas diffusion layer 4, as an auxiliary diffusion layer that promotes the uniform diffusion of the oxidizer to the cathode catalyst layer 2.

It is desirable that the moisture retaining plate 13 should be made of an insulating material which is inert to methanol and has no anti-solubility. Examples of the insulation material are polyolefins such as polyethylene and polypropylene.

It is desirable that the moisture retaining plate 13 should have a degree of air permeability, which is defined by JIS P-8117-1988, of 50 sec/100 cm³ or less. This is because if the degree of air permeability exceeds 50 sec/100 cm³, the air diffusion of the cathode from the air introduction openings 14 is blocked, thereby making it difficult to obtain a high output. The preferable range of the degree of air permeability is 10 sec/100 cm³ or less.

It is desirable that the moisture retaining plate 13 should have a degree of moisture permeability, which is defined by JIS L-1099-1993 A-1, of 6000 g/m²24h or less. It should be noted that the value of the moisture permeability degree is the value at a temperature of 40±2°C, as indicated by the measuring method defined by JIS L-1099-1993 A-1. If the degree of moisture permeability exceeds 6000 g/m²24h, the amount of water vaporized from the cathode becomes excessively large, so that the effect of promoting the water diffusion from the cathode to the anode may not be obtained to a full degree. On the other hand, if the degree of moisture permeability is less than 500 g/m²24h, an excessive amount of water is supplied to the anode, making it difficult to obtain a high output. For this reason, the degree of moisture permeability should be set in a range of 500 to 6000 g/m²24h. A further preferable range of the degree of moisture permeability is 1000 to 4000 g/m²24h.

In a direct methanol fuel cell according to the first embodiment having the above-described structure, the liquid fuel (for example, a methanol aqueous solution) in the liquid fuel tank 9 is vaporized, and the vaporized components of methanol and water diffuse through the gas-liquid separation membrane 10 and temporarily contained in the vaporized fuel containing chamber 12. Then, the vaporized components gradually diffuse through the anode gas diffusion layer 5 to be supplied to the anode catalyst layer 3, and thus the internal reformation reaction of methanol is made to occur as indicated by the following reaction formula (1).

CH₃OH + H₂O → CO₂ + 6H⁺ + 6e⁻ (1)

Further, when pure methanol is used as the liquid fuel, there is no water supplied from the fuel transmitting layer. Therefore, water generated due to the oxidization reaction of methanol in the cathode catalyst layer 2 and the moisture in the proton-conductive electrolytic membrane 6, etc. react with methanol to induce the internal reformation reaction described with the formula (1) above, or some other internal reformation reaction different from that indicated by the formula (1) under a reaction mechanism in which water is not involved.

Proton (H+) generated in the above-mentioned internal reformation reactions diffuses through the proton-conductive electrolytic membrane 6 and reaches the cathode catalyst layer 3. On the other hand, the air taken in from the air introduction openings 14 of the surface layer 15 diffuses through the moisture retaining plate 13 and the cathode gas diffusion layer 4, and is supplied to the cathode catalyst layer 2. In the cathode catalyst layer 2, the reaction represented by the following formula (2) takes place to generate water, and this is an electrical power generating reaction.

(3/2)O₂ + 6H⁺ + 6e⁻ → 3H₂O (2)

When the power generating reaction proceeds, the water generated in the cathode catalyst layer 2 by the reaction represented by the formula (2) above, etc. diffuses through the cathode gas diffusion layer 4 and reaches the moisture retaining plate 13. The evaporation of the water are prohibited by the moisture retaining plate 13, and thus the amount of moisture reserved in the cathode catalyst layer 2 increases. In this manner, as the power generation reaction proceeds, it is possible to create such a state that the amount of moisture retained in the cathode catalyst layer 2 is larger than that of the anode catalyst layer 3. As a result, due to the osmotic phenomenon, the reaction that transfers the water generated in the cathode catalyst layer 2 to the anode catalyst layer 3 via the proton-conductive electrolytic membrane 6 is promoted. Therefore, the speed of water supply to the anode catalyst layer can be improved as compared to the case where the water supply is carried out only by the fuel transmitting layer. Thus, the internal reformation reaction of methanol, represented by the formula (1), can be promoted. For this reason, it becomes possible to enhance the output density and maintain the high output density over a long period of time.

Further, when a methanol aqueous solution having a concentration of over 50% by molar or pure methanol is used as the liquid fuel, the water that diffuses from the cathode catalyst layer 2 to the anode catalyst layer 3 is used exclusively for the internal reformation reaction. Thus, the water supply to the anode catalyst layer 2 becomes stable and therefore the reaction resistance to the internal reformation reaction of methanol can be further decreased. Therefore, the long-term output performance and load current performance can be further improved. In addition, with the structure of the invention, it is possible to reduce the size of the liquid fuel tank. It should be noted that the purity of the pure methanol should desirably be 95% by weight or more and 100% by weight or less.

Next, a direct methanol fuel cell according to the second embodiment will now be described.

The direct methanol fuel cell of the second embodiment has a structure similar to that of the first embodiment except that in this embodiment, a moisture retention plate is not provided between the cathode gas diffusion layer and the surface layer.

In the second embodiment, a methanol aqueous solution having a concentration of over 50% by molar or pure methanol (the purity should desirably be 95% by weight or more and 100% by weight or less) is used as the liquid fuel to be contained in the fuel tank. With use of such a fuel, the amount of moisture that diffuses through the gas-liquid separation membrane and is supplied to the anode catalyst layer is decreased or becomes zero. On the other hand, water is generated in the cathode catalyst layer by the reaction represented by the formula (2) above, and the amount of water present is increased as the power generating reaction proceeds. In this manner, it is possible to create such a state that the amount of moisture retained in the cathode catalyst layer is larger than that of the anode catalyst layer. As a result, due to the osmotic phenomenon, the diffusion of water from the cathode catalyst layer to the anode catalyst layer can be promoted. Therefore, the water supply to the anode catalyst layer is promoted, and stabilized. Thus, the internal reformation reaction of methanol, represented by the formula (1), can be promoted. For this reason, it becomes possible to enhance the output density and maintain the high output density over a long period of time. In addition, with the structure of the invention, it is possible to reduce the size of the liquid fuel tank.

FIG. 2 shows the relationship between the maximum output and the thickness of the proton-conductive electrolytic membrane in the case where the electrolytic membrane is made of a perfluorocarbon-based material. In FIG. 2, the horizontal axis indicates the thickness of the proton-conductive electrolytic membrane and the vertical axis indicates the maximum output. The maximum output is expressed in the relative value with respect to the highest maximum output when it is fixed to 100. From this figure, it can be understood that the thickness of the proton-conductive electrolytic membrane 6 should desirably be set to 100 µm or less in the first and second embodiments described above. The reason why a high output can be obtained by setting the thickness of the proton-conductive electrolytic membrane 6 to 100 µm or less is that the diffusion of water from the cathode catalyst layer 2 to the anode catalyst layer 3 can be further promoted. However, if the thickness of the proton-conductive electrolytic membrane 6 is less than 10 µm or less, the strength of the electrolytic membrane 4 may be lowered. In order to avoid this, the thickness of the proton-conductive electrolytic membrane 6 should preferably be in a range of 10 to 100 µm, or more preferably, in a range of 10 to 80 µm.

It should be noted that as long as the water supply to the anode catalyst layer 3 is promoted and water is stably supplied by employing such a structure that the water generated in the cathode catalyst layer 2 is supplied to the anode catalyst layer 3 via the proton-conductive membrane 3, the structure of the present invention is not particularly limited.

Next, a direct methanol fuel cell according to the third embodiment will now be described.

The third embodiment is directed to a fuel cell comprising a fuel transmitting layer that selectively transmit the evaporated component of a methanol-containing liquid fuel, in which the water generated in the cathode is supplied to the anode via the proton-conductive membrane. The fuel cell of the third embodiment comprises an anode moisture retaining layer provided between the anode and the fuel transmitting layer.

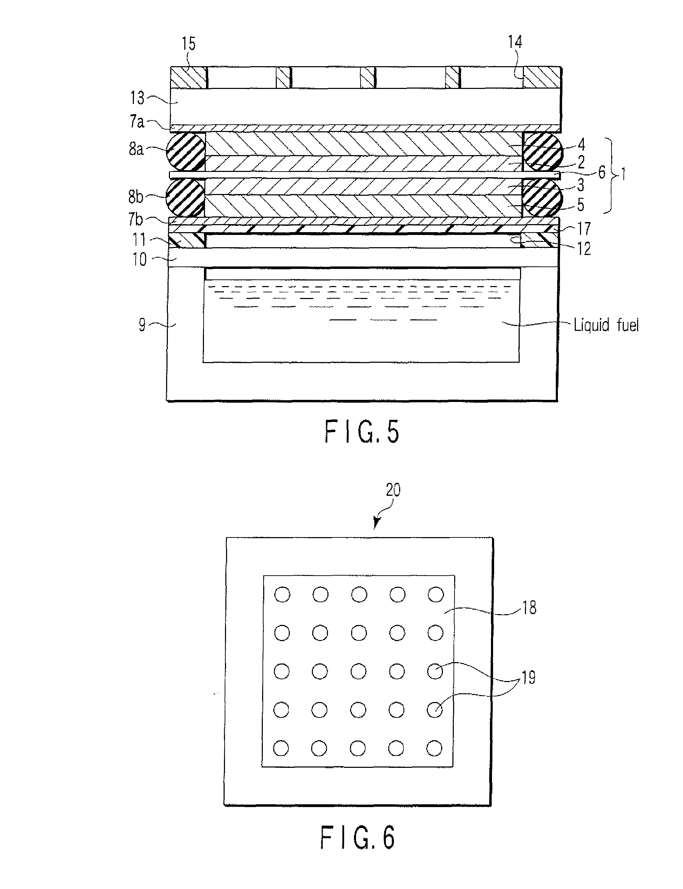

The fuel cell of the third embodiment will now be described with reference to FIGS. 5 and 6. It should be noted that structural members similar to those shown in FIG. 1 described above are designated by the same reference numerals and the explanations therefor will be omitted.

An anode moisture retaining layer 17 is provided on a surface of the anode conductive layer 7b, which is opposite to the MEA side. With this arrangement, the anode moisture retaining layer 17 is sandwiched between an anode including an anode catalyst layer 3 and an anode gas diffusion layer 5, and a fuel transmitting layer 10.

It is possible that the anode moisture retaining layer 17 has the following structure.

That is, the layer includes at least one methanol transmitting film having a methanol transmitting degree measured by method A of JIS K7126-1987 at 25°C, of 1 × 10⁵ cm³/m²·24 hr·atm to 1 × 10⁹ cm³/m²·24 hr·atm.

If the methanol transmitting degree is set to less than 1 × 10⁵ cm³/m²·24 hr·atm, the amount of methanol supplied from the fuel transmitting layer to the anode becomes short. As a result, a high output may not be obtained. On the other hand, if the methanol transmitting degree exceeds 1 × 10⁹ cm³/m²·24 hr·atm, it would create the same state where no anode moisture retaining layer is provided.

It is difficult to retain the entire amount of water diffusing from the cathode to the anode by the anode, and therefore a portion of the water permeates through the anode to reach the fuel transmitting layer. Then, the portion of the water is accumulated in the vaporized fuel containing chamber 12. As a result, methanol is diluted, and the amount of methanol supplied to the anode may become short. In order to avoid this, the anode moisture retaining layer is provided between the anode and the fuel transmitting layer. With this structure, it is possible to suppress the accumulation of the water diffusing from the cathode to the anode in the evaporated fuel containing chamber 12. Further, the methanol transmitting degree of the methanol transmitting film that forms the anode moisture retaining layer is set within the above-described range, and thus it is possible to prevent the anode moisture retaining layer from prohibiting the transmission of methanol. Thus, a high output can be obtained.

A more preferable range of the methanol transmitting degree is 1 × 10⁶ to 5 × 10⁸ cm³/m²·24 hr·atm.

It is preferable that the methanol transmitting film should be of a type that has a water repellency in which the resistance to hydraulic pressure for water at 20°C is 500 mm or higher, or a water absorption property in which the resistance to hydraulic pressure for water at 20°C is less than 500 mm, when measured by the high-hydrostatic pressure method under JIS L1092-1988.

In the case where the methanol transmitting film has a water repellency, the water transmitted through the anode cannot permeate the anode moisture retaining layer due to the water repellency of the methanol transmitting film. For this reason, it is possible to store water on the methanol transmitting film. In this manner, the concentration of water can be increased in the vicinity of the anode, and it is possible to supply a sufficient amount of water for the methanol reformation reaction. Thus, the reaction resistance to the reformation reaction can be decreased.
Accordingly, the output performance can be improved. Further, the anode moisture retaining layer exhibits an excellent effect of suppressing the transmission of water, and therefore the dilution of methanol can be fully suppressed. A preferable range of the resistance to hydraulic pressure of the methanol transmitting film is 1000 mm or higher, and more preferably, it should be 5000 mm or higher.

On the other hand, in the case where the methanol transmitting film has a water absorption property, the water transmitted through the anode can be retained in the methanol transmitting film. In this manner, the concentration of water can be increased in the vicinity of the anode, and it is possible to supply a sufficient amount of water for the methanol reformation reaction. Thus, the reaction resistance to the reformation reaction can be decreased. Accordingly, the output performance can be improved.

The methanol transmitting degree and the resistance to hydraulic pressure can be adjusted not only by the quality of the material, but also by, for example, the porosity, the average pore diameter, the shape of pores, the thickness of the film, etc.

It suffices only if the methanol transmitting film is made of an insulating material which is inert to methanol and has no anti-solubility. Examples of the insulation material are polymers such as polyethylene, polypropylene, polystyrene, polytetrafluoroethylene, ethylene-propylene copolymer, polyvinyl chloride, polyacrylonitryl, silicone and polyethylenetelephthalate, and a metal material such as a titanium thin plate. One type of material or two or more types of materials may be used to form the film. Of these examples, a fluorocarbon resin such as polytetrafluoroethylene is preferable.

Examples of the water-absorbing material having a resistance to hydraulic pressure of less than 500 mm are oreganic polymers such as a nonwoven fabric of polyester, sodium polyacrylate, foamed polyethylene, a nonwoven fabric of polypropylene, polyurethane, a nonwoven fabric of rayon and polyacetals, as well as inorganic sheets such as of pulp, paper or cotton.

The methanol transmitting film may be non-porous or porous as long as the methanol transmitting degree falls within the above-mentioned range. The porous film may be either one of the type having a closed-cell porous structure and that having an open-cell porous structure. Of these, the open-cell porous type is preferable. Examples of the porous film having an open-cell porous structure are foams and fabric porous members such as woven textures and nonwoven fabrics. The pores may be formed in the entire surface. It is alternatively possible to use a porous film 20 in which closed-cell pores 19 are made in a region 18 that corresponds to the anode gas diffusion layer, for example, as shown in FIG. 6.

The anode moisture retaining layer may be made of one methanol transmitting film or two or more methanol transmitting films. In the case where two or more films are used, those other than the one that opposes the anode can be made to serve as films for adjusting the amount of methanol supplied to the anode.

It is preferable that the amount of methanol transmitted by the anode moisture retaining layer should be adjusted in accordance with the amount of methanol transmitted by the fuel transmitting layer. More specifically, in the case where the amount of methanol transmitted by the fuel transmitting layer is large, the methanol crossover can be suppressed by reducing the methanol transmission amount of the anode moisture retaining layer. On the other hand, in the case where the methanol transmission amount of the fuel transmitting layer is small, it is desirable that the methanol transmission amount of the anode moisture retaining layer should be increased to enhance the methanol supply speed. The methanol transmission amount of the anode moisture retaining layer can be adjusted by controlling the methanol transmitting degree.

It is desirable that the methanol concentration of the liquid fuel contained in the liquid fuel tank 9, which serves as the liquid fuel reservoir portion, should be over 50% by molar. Thus, the water that diffuses from the cathode catalyst layer 2 to the anode catalyst layer 3 is used exclusively for the internal reformation reaction. Accordingly, the water supply to the anode catalyst layer 3 becomes stable and therefore the reaction resistance to the internal reformation reaction of methanol can be further decreased. Therefore, the output performance can be further improved. In addition, with the structure of the invention, it is possible to reduce the size of the liquid fuel tank. Examples of the liquid fuel are a methanol aqueous solution having a concentration of over 50% by molar and pure methanol. The purity of the pure methanol should desirably be 95% by weight or more and 100% by weight or less.

It should be noted here that in the fuel cell described above and shown in FIG. 5, at least one porous plate may be provided between the fuel transmitting layer 10 and the liquid fuel tank 9 serving as the liquid fuel reservoir portion. With this structure, it is possible to adjust the speed of supplying the fuel from the liquid fuel reservoir portion to the fuel transmitting layer.

In connection with the fuel cell shown in FIG. 5 described above, the description is directed to a type that includes a moisture retaining plate; however the present invention is not limited to this type, but it can be similarly applied to a fuel cell that is not equipped with a moisture retaining plate such as in the second embodiment.

### [Examples]

Examples of the present invention will now be described in details with reference to accompanying drawings.

### (Example 1)

### <Manufacture of Anode>

To catalyst-supported (Pt:Ru = 1:1) carbon black for anode, a perfluorocarbon sulfonic acid solution, water and methoxypropanol were added, and the catalyst-supported carbon black was dispersed, thus preparing a paste. The obtained paste was applied onto porous carbon paper, which would serve as an anode gas diffusion layer, and thus an anode catalyst layer having a thickness of 450 µm was obtained.

### <Manufacture of Cathode>

To catalyst-supported (Pt) carbon black for cathode, a perfluorocarbon sulfonic acid solution, water and methoxypropanol were added, and the catalyst-supported carbon black was dispersed, thus preparing a paste. The obtained paste was applied onto porous carbon paper, which would serve as a cathode gas diffusion layer, and thus a cathode catalyst layer having a thickness of 400 µm was obtained.

A perfluorocarbon sulfonic acid film (nafion film of Du Pont) having a thickness of 30 µm and a water content rate of 10 to 20% by weight was sandwiched between the anode catalyst layer and the cathode catalyst layer, and they were subjected to hot press. Thus, a membrane electrode assembly (MEA) was obtained.

A polyethylene porous film having a thickness of 500 µm, an air permeability degree of 2 sec/100 cm³ (JIS P-8117-1988) and a moisture permeability degree of 4000 g/m²24h (JIS L-1099-1993, Method A-1) was prepared as a moisture retaining plate.

A frame 11 made of PET and having a thickness of 25 µm was prepared. Further, a silicone rubber sheet having a thickness of 200 µm was prepared as a gas-liquid separation membrane.

The obtained membrane electrode assembly 1, moisture retaining plate 13, frame 11 and gas-liquid separation membrane 10 were assembled together into an internal evaporation direct methanol fuel cell having the structure shown in FIG. 1. At the same time, 2 mL of a pure methanol having a purity of 99.9% by weight was contained in the fuel tank.

### (Example 2)

An internal evaporation direct methanol fuel cell was assembled in a similar manner to that of Example 1 described above except that a methanol aqueous solution having a concentration of 10% by weight was contained in the fuel tank in place of pure methanol.

### (Example 3)

An internal evaporation direct methanol fuel cell was assembled in a similar manner to that of Example 1 described above except that a surface layer is stacked directly on the cathode diffusion layer, in other words, the moisture retaining plate is not provided between the cathode diffusion layer and the surface layer.

### (Comparative Example 1)

An internal evaporation direct methanol fuel cell was assembled in a similar manner to that of Example 1 described above except that a methanol aqueous solution having a concentration of 10% by weight was contained in the fuel tank in place of pure methanol, and the moisture retaining plate is not provided between the cathode diffusion layer and the surface layer.

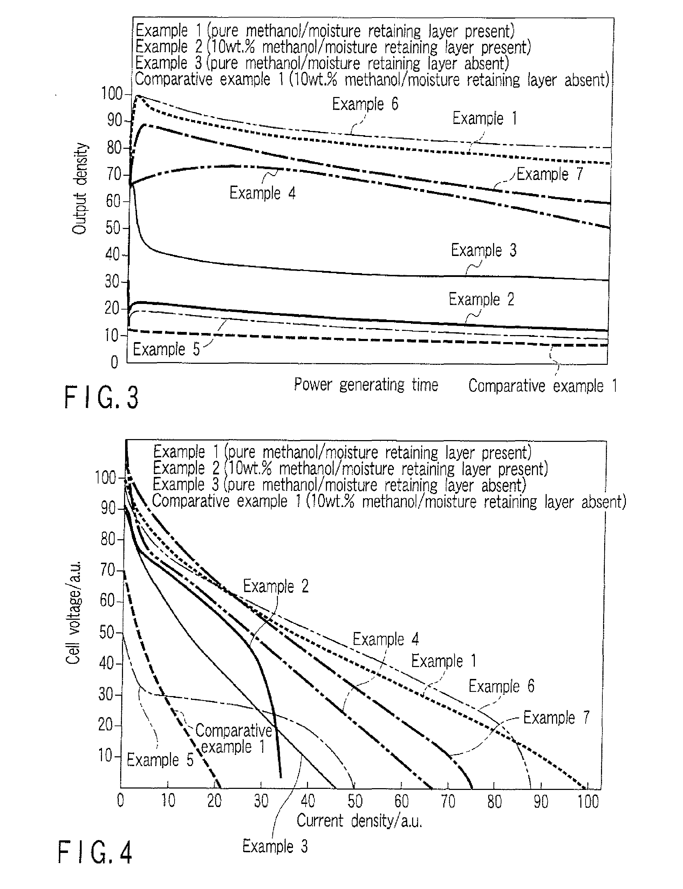

With regard to each of the fuel cells obtained in Examples 1 to 3 and Comparative Example 1, the electric power was generated at room temperature and a constant load. The change in cell output along with time during the power generation was measured, and the result of each case was summarized in FIG. 3. In FIG. 3, the horizontal axis indicates the power generating time and the vertical axis indicates the power density. The output density is expressed in the relative value with respect to the maximum output density obtained in Example 1 when it is fixed to 100.

Further, with regard to each of the fuel cells obtained in Examples 1 to 3 and Comparative Example 1, the electric power was generated as the load current was increased in steps. The relationship between the cell voltage and load current value during the power generation was summarized for each case in FIG. 4. In FIG. 4, the horizontal axis indicates the current density and the vertical axis indicates the cell voltage (potential). The current density is expressed in the relative value with respect to the maximum load current density obtained in Example 1 when it is fixed to 100. Further, the cell voltage is expressed in the relative value with respect to the maximum cell voltage obtained in Example 1 when it is fixed to 100.

As is clear from FIGS. 3 and 4, the output density of each of the fuel cells obtained in Examples 1 to 3 was high as 20 or more as compared to the case of Comparative Example 1. Further, it can be understood that the maximum load current density was larger than 30 in each of Examples 1 to 3.

By contrast, the output density of the fuel cell obtained in Comparative Example 1 was low as about 10 and the maximum load current density thereof was low as about 20.

### (Example 4)

An internal evaporation direct methanol fuel cell having a similar structure to that described in Example 1 above was assembled except that a proton-conductive electrolytic membrane formed of polyetherketone containing sulfonate group (resin of a hydrocarbon containing sulfonate group) and having a thickness of 25 µm was used.

### (Examples 5 to 7)

In each example, an internal evaporation direct methanol fuel cell having a similar structure to that described in Example 1 above was assembled except that a respective polyethylene porous film having an air permeability and moisture permeability indicated in Table 1 provided below and having a thickness of 500 µm was used as the moisture retaining plate.

**Table 1 (Air permeating degree and moisture permeating degree of moisture retaining plate)**

| | Air permeating degree of moisture retaining plate (sec/100 cm³) | Moisture permeating degree of moisture retaining plate (g/m² 24h) |
|---|---|---|
| Examples 5 | 50 | 700 |
| Examples 6 | 10 | 3000 |
| Examples 7 | 1 | 6000 |

With regard to each of the fuel cells obtained in Examples 4 to 7, the change in the output along with time and the current-voltage performance were measured, and the results of each case were added to FIGS. 3 and 4.

As is clear from FIGS. 3 and 4, each of the fuel cells obtained in Examples 5 to 7 maintained a high voltage over a long period of time as compared to the case of Comparative Example 1, and further, a high output was obtained as compared to the case of Comparative Example 1. These results indicate that it is desirable to use such a moisture retaining plate having a degree of air permeability of 50 sec/100 cm³ or less and a degree of moisture permeability of 6000 g/m²24h or less. As the results of Examples 1 and 5 to 7 are compared with each other, it can be understood that the performance of Examples 1, 6 and 7 are particularly good. Therefore, the degree of air permeability should be set to 10 sec/100 cm³ or less and the degree of moisture permeability should be set to 1000 to 6000 g/m²24h in order to obtain a long-term stability and a high output.

At the same time, from the results obtained in Example 4, it can be understand that a sufficiently long-term stability and high output can be obtained if a resin membrane of a hydrocarbon containing sulfonate group is used as the proton-conductive membrane.

### (Example 8)

A cathode (air electrode) was manufactured in the following manner. That is, first, to platinum-supported carbon black, a perfluorocarbon sulfonic acid solution, water and methoxypropanol were added, and the catalyst-supported carbon black was dispersed, thus preparing a paste. The obtained paste was applied onto porous carbon paper, which would serve as a gas diffusion layer for air electrode. The resultant was dried at room temperature and thus an air electrode was obtained.

An anode (fuel electrode) was manufactured in the following manner. That is, to carbon grains that support platinum-ruthenium alloy fine powder, a perfluorocarbon sulfonic acid solution, water and methoxypropanol were added, and the catalyst-supported carbon black was dispersed, thus preparing a paste. The obtained paste was applied onto porous carbon paper, which would serve as an gas diffusion layer for air electrode. The resultant was dried at room temperature and thus a fuel electrode was obtained.

As the electrolytic membrane, a perfluorocarbon sulfonic acid film (nafion film of Du Pont) having a thickness of 30 µm and a water content rate of 10 to 20% by weight was used. This electrolytic membrane was sandwiched between the air electrode and the fuel electrode, and they were subjected to hot press. Thus, a membrane electrode assembly (MEA) was obtained. It should be noted that the electrode area was set to 12 cm² in both of the air electrode and fuel electrode.

This power generating portion (MEA) was sandwiched between gold foils (serving as a cathode conductive layer and an anode conductive layer, respectively), in which pores are made in order to take in air and methanol vapor.

A polytetrafluoroethylene porous film having a thickness of 60 µm, a methanol permeating degree of 1.7 × 10⁸ cm³/m²·24h·atm, and a resistance to hydraulic pressure of 22000 mm, was prepared as an anode moisture retaining plate. This porous membrane was placed on the anode conductive layer of the MEA.

A moisture retaining plate similar to that described in Example 1 was placed on the cathode conductive layer.

A rubber-made O-ring was set on each of the upper and lower surfaces of the proton-conductive membrane, and thus the space between the moisture retaining plate and the anode moisture retaining layer was sealed. The MEA sandwiched between the moisture retaining plate and the anode moisture retaining layer is fixed with a screw to the liquid fuel tank via the gas-liquid separation membrane. Further, an SUS-made surface layer having air holes and a thickness of 2 mm was fixed with a screw onto the moisture retaining plate of the air electrode side.

As described above, a fuel cell having such a structure as shown in FIG. 5 described before was manufactured. Then, 5 mL of a pure methanol having a purity of 99.9% by weight was poured into the fuel tank, and the current value when a voltage of 0.3V was applied was measured in an environment in which the temperature was 25°C and a relative humidity was 50%.

### (Example 9)

A fuel cell was assembled in a similar manner to that of Example 8 except that a polytetrafluoroethylene porous membrane that satisfies the conditions indicated in Table 2 below was used as the anode moisture retaining layer, and the current value when a voltage of 0.3V was applied was measured.

### (Example 10)

A fuel cell was assembled in a similar manner to that of Example 8 except that a water absorptive foamed polyethylene that satisfies the conditions indicated in Table 2 below was used as the anode moisture retaining layer, and the current value when a voltage of 0.3V was applied was measured.

### (Example 11)

A fuel cell was assembled in a similar manner to that of Example 8 except that a porous layer made of a water absorptive polyester nonwoven fabric that satisfies the conditions indicated in Table 2 below was used as the anode moisture retaining layer, and the current value when a voltage of 0.3V was applied was measured.

### (Example 12)

A fuel cell was assembled in a similar manner to that of Example 8 except that a porous layer made of a water absorptive polypropylene nonwoven fabric that satisfies the conditions indicated in Table 2 below was used as the anode moisture retaining layer, and the current value when a voltage of 0.3V was applied was measured.

### (Example 13)

A fuel cell was assembled in a similar manner to that of Example 8 except that a water absorptive polyurethane that satisfies the conditions indicated in Table 2 below was used as the anode moisture retaining layer, and the current value when a voltage of 0.3V was applied was measured.

### (Example 14)

A fuel cell was assembled in a similar manner to that of Example 8 except that a water absorptive pulp that satisfies the conditions indicated in Table 2 below was used as the anode moisture retaining layer, and the current value when a voltage of 0.3V was applied was measured.

### (Example 15)

A fuel cell was assembled in a similar manner to that of Example 8 except that a water absorptive rayon nonwoven fabric that satisfies the conditions indicated in Table 2 below was used as the anode moisture retaining layer, and the current value when a voltage of 0.3V was applied was measured.

### (Example 16)

A fuel cell was assembled in a similar manner to that of Example 8 except that a water absorptive foamed polypropylene that satisfies the conditions indicated in Table 2 below was used as the anode moisture retaining layer, and the current value when a voltage of 0.3V was applied was measured.

### (Example 17)

A fuel cell was assembled in a similar manner to that of Example 8 except that a silicone sheet that satisfies the conditions indicated in Table 2 below was used as the anode moisture retaining layer, and the current value when a voltage of 0.3V was applied was measured.

### (Example 18)

A fuel cell was assembled in a similar manner to that of Example 8 except that the anode moisture retaining layer was not employed, and the current value when a voltage of 0.3V was applied was measured.

### (Example 19 and Comparative Examples 2 and 3)

In each case, a fuel cell was assembled in a similar manner to that of Example 8 except that polyethyleneterephthalate sheet that satisfies the conditions indicated in Table 2 below was used as the anode moisture retaining layer, and the current value when a voltage of 0.3V was applied was measured. It should be noted that in Comparative Example 2, the resistance to hydraulic pressure was 500 mm or higher. On the other hand, in each of Example 19 and Comparative Example 3, the polyethyleneterephthalate sheet has a number of through holes as shown in FIG. 6 described above, water supplied to measure the resistance to hydraulic pressure passes therethrough quickly, and therefore it was not possible to measure the resistance to hydraulic pressure.

With regard to each of Examples 8 to 19 and Comparative Examples 2 and 3, the output was calculated from the measured current value at 0.3V. The output value of each of Examples 8 to 17, 19 and Comparative Examples 2 and 3 is shown in Table 2 below as a relative value when the output value at 0.3V obtained in Example 18 is fixed to 100.

**Table 2**

| | Methanol permeating degree (cm³/m²·24 hr·atm) | Resistance to hydraulic pressure | Porosity (%) | Thickness of membrane (µm) | Average pore diameter (µm) | Output |
|---|---|---|---|---|---|---|
| Example 8 | 1.7×10⁸ | 22000 mm | 65 | 60 | 0.1 | 115 |
| Example 9 | 8.0×10⁸ | 2500 mm | 80 | 100 | 1 | 109 |
| Example 10 | 5.0×10⁸ | Less than 500 mm | 30 | 300 | 18 | 108 |
| Example 11 | 4.5×10⁸ | Less than 500 mm | 70 | 500 | - | 113 |
| Example 12 | 5.5×10⁸ | Less than 500 mm | - | 50 | - | 105 |
| Example 13 | 4.4×10⁸ | Less than 500 mm | 70 | 500 | 10 | 106 |
| Example 14 | 6.0×10⁸ | Less than 500 mm | - | 15 | - | 108 |
| Example 15 | 5.8×10⁸ | Less than 500 mm | - | 390 | - | 106 |
| Example 16 | 5.5×10⁸ | Less than 500 mm | 53 | 800 | 100 | 110 |
| Example 17 | 2.8×10⁷ | 20000 mm | 0 | 100 | 0 | 105 |
| Example 18 | - | - | - | - | - | 100 |
| Example 19 | 1.7×10⁷ | - | 10 | 100 | - | 103 |
| Comparative Example 2 | 3.2×10² | 500 mm or more | 0 | 100 | - | 5 |
| Comparative Example 3 | 8.0×10⁴ | - | 4 | 100 | - | 5 |

According to the results summarized in Table 2, the fuel cells of Examples 8 to 17 and 19, which employs an anode moisture retaining layer including a membrane having a methanol permeating degree in a specified range exhibited a high output as compared to that of Example 18 which does not employ an anode moisture retaining layer, and thus it can be understood that the output performance can be improved with use of the anode moisture retaining layer in each case. Of Examples 8 to 17 and 19, Examples 8 to 17 in particular, each having a water repellency or water absorptive property, exhibited high outputs. Further, there was such a tendency that a high output was easily obtained in Examples 8, 9 and 17, which had a water repellency indicated by a resistance to hydraulic pressure of 500 mm or higher. Further, the change in the output along with time was measured in a similar manner to that described in connection with Example 1 above. It has been confirmed that each of Examples 8 to 19 maintains a high voltage over a long period of time as compared to the case of Comparative Example 1.

By contrast, with regard to the fuel cells of Comparative Examples 2 and 3, the methanol permeating degree of each of which fell out of the specified range exhibited a low output at 0.3V as compared to those of Examples 8 to 19.

As an alternative to the fuel cell of Example 8, the number of polytetrafluoroethylene porous membranes employed was increased to 2 in the anode moisture retaining layer, and the current value in the case a voltage of 0.3V was applied was measured. The results of the measurements were similar to those of the case of the original Example 8.

Lastly, the present invention is not limited merely to the embodiments described above, but when the invention is practically carried out, the structural elements thereof can be modified in various ways as long as the essence of the invention remains in its scope. Further, when some of the structural elements disclosed in the above-described embodiments are combined in appropriate manners, various modified versions of the invention can be realized. More specifically, for example, some of the structural elements may be omitted from the entire structure described in an embodiment, or structural elements of different embodiments may be combined in appropriate ways.

## Claims

1. A fuel cell comprising: a cathode catalyst layer; an anode catalyst layer; a proton-conductive membrane provided between the cathode catalyst layer and the anode catalyst layer; and a fuel transmitting layer that supplies a vaporized component of a liquid fuel to the anode catalyst layer, wherein:
water generated in the cathode catalyst layer is supplied to the anode catalyst layer via the proton-conductive membrane, and
the liquid fuel is one of a methanol aqueous solution having a concentration of over 50% by molar and liquid methanol.

2. A fuel cell comprising:
a cathode catalyst layer;
an anode catalyst layer;
a proton-conductive membrane provided between the cathode catalyst layer and the anode catalyst layer;
a fuel transmitting layer that supplies a vaporized component of a liquid fuel to the anode catalyst layer;
a surface layer having an air introduction opening; and
a moisture retaining plate, provided between the surface layer and the cathode catalyst layer, that suppresses evaporation of water generated in the cathode catalyst layer.

3. The fuel cell according to claim 2, wherein the liquid fuel is one of a methanol aqueous solution having a concentration of over 50% by molar and liquid methanol.

4. The fuel cell according to any one of claims 1 to 3, wherein the proton-conductive membrane contains a perfluorocarbon-based resin and has a thickness of 100 µm or less.

5. A fuel cell comprising:
a cathode;
an anode;
a proton-conductive membrane provided between the cathode and the anode;
a fuel transmitting layer that transmits a vaporized component of a methanol-containing liquid fuel; and
an anode moisture retaining plate, provided between the anode and the fuel transmitting layer, that includes at least one methanol transmitting film having a methanol transmitting degree of 1 × 10⁵ cm³/m²·24 hr· atm to 1 × 10⁹ cm³/m²·24 hr·atm, measured by method A of JIS K7126-1987 at 25°C,
wherein water generated in the cathode is supplied to the anode via the proton-conductive membrane.

6. A fuel cell comprising:
a cathode;
an anode;
a proton-conductive membrane provided between the cathode and the anode;
an air introduction portion that introduces air to the cathode;
a moisture retaining plate, provided between the air introduction portion and the cathode, that suppresses evaporation of water generated in the cathode;
a fuel transmitting layer that transmits a vaporized component of a methanol-containing liquid fuel; and
an anode moisture retaining plate, provided between the anode and the fuel transmitting layer, that includes at least one methanol transmitting film having a methanol transmitting degree of 1 × 10⁵ cm³/m²·24 hr· atm to 1 × 10⁹ cm³/m²·24 hr·atm, measured by method A of JIS K7126-1987 at 25°C.

7. The fuel cell according to claim 5 or 6, wherein a methanol concentration of the methanol-containing liquid fuel is over 50% by molar.

8. The fuel cell according to claim 5 or 6, wherein said at least one methanol transmitting film has a water repellency in which a resistance to hydraulic pressure is 500 mm or higher.

9. The fuel cell according to claim 5 or 6, wherein said at least one methanol transmitting film has a resistance to hydraulic pressure of less than 500 mm, and a water absorbing property.

10. The fuel cell according to claim 5 or 6, which further comprising a liquid fuel reservoir portion, provided behind the fuel transmitting layer, that reserves the methanol-containing liquid fuel.
